(19) Europäisches Patentamt
European Patent Office
Office européen des brevets

(11) **EP 4 311 736 B1**

(12) **EUROPEAN PATENT SPECIFICATION**

(45) Date of publication and mention
of the grant of the patent:
**27.11.2024  Bulletin 2024/48**

(21) Application number: **22187692.3**

(22) Date of filing: **29.07.2022**

(51) International Patent Classification (IPC):
**B60W 30/12** $^{(2020.01)}$      **B60W 60/00** $^{(2020.01)}$
**B60W 50/00** $^{(2006.01)}$

(52) Cooperative Patent Classification (CPC):
**B60W 30/12; B60W 50/0097; B60W 60/0011;**
B60W 2050/0031; B60W 2552/53

(54) **METHOD FOR CONTROLLING A VEHICLE**

VERFAHREN ZUR STEUERUNG EINES FAHRZEUGS

PROCÉDÉ DE COMMANDE D'UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**31.01.2024  Bulletin 2024/05**

(73) Proprietor: **Hitachi, Ltd.**
**Tokyo 100-8280 (JP)**

(72) Inventor: **ITAKURA, Kyoshiro**
**London, EC2Y 5AJ (GB)**

(74) Representative: **MERH-IP Matias Erny Reichl
Hoffmann
Patentanwälte PartG mbB
Paul-Heyse-Strasse 29
80336 München (DE)**

(56) References cited:
**EP-A1- 2 848 487**

• **DU XINXIN ET AL: "Development of a
Genetic-Algorithm-Based Nonlinear Model
Predictive Control Scheme on Velocity and
Steering of Autonomous Vehicles", IEEE
TRANSACTIONS ON INDUSTRIAL
ELECTRONICS, IEEE SERVICE CENTER,
PISCATAWAY, NJ, USA, vol. 63, no. 11, 1
November 2016 (2016-11-01), pages 6970 - 6977,
XP011625143, ISSN: 0278-0046, [retrieved on
20161007], DOI: 10.1109/TIE.2016.2585079**
• **PAULS JAN-HENDRIK ET AL: "Real-time
Cooperative Motion Planning using Efficient
Model Predictive Contouring Control", 2022 IEEE
INTELLIGENT VEHICLES SYMPOSIUM (IV), IEEE,
4 June 2022 (2022-06-04), pages 1495 - 1503,
XP034152276, DOI:
10.1109/IV51971.2022.9827063**

**Description**

The present subject matter relates to a method and a control device for controlling a vehicle and a vehicle including the control device.

In the wake of increasing traffic loads and rising demands for safety and comfort, driver assistance systems and autonomous driving play an important role in vehicle development. Automated driving requires handling a plurality of different driving scenarios, ranging from parking to crash avoidance on challenging road conditions. The objective is to ensure road safety and increase passenger comfort. Model predictive control (MPC) can be used for controlling an automated vehicle. MPC is a control strategy that optimizes a weighted cost function with constraints, to generate optimal control inputs (manipulated variables) for a given control system. In terms of automated driving, an optimized route calculation can be achieved using a cost function that satisfies at least one constraint with respect to vehicle or environmental conditions. For example, a constraint that limits the jerk of the vehicle can be included in the cost function, to increase the ride comfort on the calculated route. However, limiting the jerk can cause a delay in vehicle response when a control input is changed, which can cause the vehicle to deviate from the desired path. Therefore, it is necessary to adjust the constraints of the cost function depending on the driving conditions to ensure the safety of the passengers.

Patent Literature 1: US 2020/0301374 A1

Patent Literature 1 describes a predictive control method that determines an output to an actor for automatically driving a vehicle using a state equation that includes an operating model of the vehicle and a plurality of functions representing constraints required for automatically driving the vehicle. In particular, the constraints are expressed in terms of weight functions for risk level, speed error, acceleration, and jerk. Based on the driving situation, weighting coefficients of the constraint functions are adjusted depending on whether driving comfort or danger avoidance is required.

Further prior art is known from DU XINXIN ET AL: "Development of a Genetic-Algorithm-Based Nonlinear Model Predictive Control Scheme on Velocity and Steering of Autonomous Vehicles", IEEE Transactions on industrial electronics, vol.63, no. 11, November 2016.

The herein described subject matter addresses the technical object of improving lane keeping of automated vehicles for increasing passenger safety. This object is achieved by the subject matter of the appended claims.

According to the subject matter set forth in the appended claims, there is proposed a method for controlling a vehicle with at least one actor and a control device.

The vehicle may preferably be an automated vehicle. In this context, an *"automated vehicle"* can include a vehicle with driver assistance systems such as adaptive cruise control (ACC), automatic parking etc., as well as an autonomous vehicle.

The control device may be included in a vehicle control unit (VCU) or may itself be the vehicle control unit. Alternatively, the control device may be a separate control unit located apart from the VCU in the vehicle.

Furthermore, a computer program product is provided that is storable in a memory and comprises instructions which, when carried out by a computer, cause the computer to perform the method as described below.

In a first step of the method, a reference path and at least one manipulated variable are obtained by the control device. The reference path can be obtained, for example, from a path planning unit, which can be included in the VCU, for example. The path planning unit may generate the reference path by global path planning using information from a map, and/or local path planning, using sensors that may be installed at/on the vehicle, for example.

Global path planning may be understood as a low-resolution high-level planning that may determine map information before the vehicle starts a trip to a destination, and may create a route based on the determined map information. The map information may be received by the path planning unit, for example, from a server storing maps, a navigation system of the vehicle, a global positioning system (GPS) etc.

Local path planning may be understood as a high-resolution low-level planning that operates by generating a path using a limited time and space boundary based on information received by the sensors. The sensors for local path planning may comprise, e.g., a camera and/or a radar which may be mounted on the vehicle and may transmit information/signals to the path planning unit. The signal transmission may be carried out wirelessly or by wire.

In this way, a reference path can be generated that may follow a waypoint provided by a global path planning unit along a centreline of a current lane and also may avoid obstacles detected by the camera and/or the radar.

The at least one manipulated variable may be, for example, a steering angle, a driving torque and/or a braking torque at the individual wheels of the vehicle. Preferably, the at least one manipulated variable is a vector comprising a plurality of manipulated variables. These manipulated variables may result from the generated reference path and can be obtained/measured by additional sensors attached to the vehicle to detect vehicle behaviour. The sensors may comprise, for example, a steering angle sensor, a speed sensor, an acceleration sensor (G-sensor), a yaw rate sensor etc. The sensors may be electrically connected to the control device for transmitting the respective sensor signals to the latter. The signal transmission may be carried out wirelessly or by wire. The transmitted sensor signals may serve directly as manipulated variable or be further processed by the control device to determine/calculate the required manipulated variable.

After obtaining the reference path and the at least one manipulated variable, a vehicle path and a vehicle motion are predicted for a predetermined prediction horizon based on the at least one manipulated variable. To predict the path and motion of the vehicle, a vehicle model can be used, which may include equations of motion to calculate the vehicle dynamics. Based on the received reference path, the vehicle model may further determine the required vehicle motion for following the reference path.

Preferably the vehicle model may be a state space model according to formula (1) comprising an input vector U and a vehicle state vector X.

$$\dot{X} = f(X, U) \tag{1}$$

The input vector U may comprise the manipulated variables of the vehicle model, such as steering angle, driving torque and/or braking torque. The vehicle state vector X may comprise the state variables of the vehicle model that represent the vehicle motion, such as yaw angle, yaw rate, side slip angle, position, velocity, acceleration, and jerk. It may be also possible to use a transfer function or any other type of process model for representing the vehicle dynamics.

Using a state space model as described in formula (1) allows for predicting the vehicle path and the vehicle motion for a predetermined prediction horizon based on the at least one manipulated variable if the initial conditions of vehicle state vector X are given. The predetermined prediction horizon may be a time period in which the path and motion of the vehicle can be predicted by the state space model. For example, a recursive prediction may be carried out, where the initial conditions of the state space model and the obtained manipulated variable(s) serve as starting point. The length of the predetermined horizon may be defined, for example, depending on the system response time of the vehicle model and the calculation capacity of the control unit.

Subsequently, the predicted vehicle path and the predicted vehicle motion are optimized by varying the at least one manipulated variable considering at least one constraint on the vehicle motion. Preferably, the optimization is performed by minimizing a cost function, which may most preferably be a quadratic cost function as formulated in formula (2) below:

$$J = \int_{t=0}^{P} E^{T}(t)Q(t)E(t)dt = \int_{t=0}^{P} \|E(t)\|_{Q(t)}^{2} \, dt \tag{2}$$

$$\text{with } E = X - X_r$$

wherein the E denotes a difference of the predicted vehicle state vector X from a target state vector $X_r$ required to maintain the reference path (required vehicle motion to follow the reference path), Q denotes the cost weight and P denotes the prediction horizon.

In other words, to optimize the predicted vehicle path and the predicted vehicle motion, the at least one manipulated variable may be varied until the difference between the predicted vehicle state vector X and the target state vector $X_r$ reaches a minimum, wherein the individual variables of the vehicle state vector X may be weighted differently. As can be seen in formula (2), the cost function may be minimized over the entire prediction horizon P.

When optimising the predicted vehicle path and motion, which can be done e.g., by minimizing the cost function according to equation (2), at least one constraint on the vehicle motion is taken into account. This means that at least one constraint on a variable of the vehicle state model X is considered, e.g., according to formula (3)

$$G_X\big(X(t), \dots X(t+P)\big) \cdot X \le 0 \tag{3}$$

wherein $G_x$ denotes a coefficient of constraint for the vehicle state vector X.

For example, the at least one constraint on the vehicle motion may be a constraint on yaw angle, yaw rate, side slip angle, velocity, acceleration, and/or jerk. Preferably, the at least one constraint on the vehicle motion may be a constraint on the jerk, to ensure/improve ride comfort during the automated driving. In the following, the at least one constraint on the vehicle motion is also referred to as *"vehicle motion constraint"*.

In a further step, after the optimisation has been completed, a maximum path error is determined from a difference between the optimized predicted vehicle path and the reference path in the predetermined prediction horizon. This may be done, e.g., by comparing the respective state variable of the vehicle model according to formula (1) with the reference path over the entire prediction horizon after the minimization of the cost function according to formulas (2) and (3) has been finished.

If the maximum path error is smaller than a lane width constraint on the reference path, at least one manipulated variable resulting from the optimized predicted vehicle path and the optimized predicted vehicle motion is transmitted to the at least one actor of the vehicle.

The lane width constraint on the reference path may define an allowable deviation from a centreline of a lane which may constitute the reference path. For example, the lane width constraint can be derived from a distance of the centreline/reference path to both borders of the lane, taking into account a predetermined distance to each border.

However, if the maximum path error is larger than the lane width constraint on the reference path, the at least one constraint on the vehicle motion is extended and the optimization of the predicted vehicle path and the predicted vehicle motion is repeated using the at least one extended constraint on the vehicle motion. This means that the lane width constraint may be the most important constraint to consider when optimising the predicted vehicle path and the predicted vehicle motion to ensure passenger safety in an automated vehicle. Therefore, a constraint intended for riding comfort, such as a constraint on the jerk, is extended/mitigated and the optimization is repeated in order to reduce the maximum path error and to keep the lane. In other words, a constraint ensuring safety is prioritized over a constraint providing riding comfort. Preferably, the manipulated variable of the at least one actor of the vehicle is not changed, as long as the predicted maximum path error exceeds the lane width constraint.

Determining the maximum path error in a predetermined prediction horizon enables an early detection of an inadmissible deviation of the vehicle from the reference path, which can then be taken into account in a current calculation of the vehicle model (e.g., by minimization of the cost function with an extended/mitigated jerk constraint) and thus avoided in real driving operation. In this way, the safety of the passengers in an automated vehicle can be increased.

According to an example, the optimization of the predicted vehicle path and the predicted vehicle motion in the predetermined prediction horizon may be repeated until the maximum path error is smaller than the lane width constraint. Additionally or alternatively, the optimization may be repeated until a predetermined limit value of the at least one constraint on the vehicle motion is reached.

This means that, if after a first optimization/minimization of the cost function with an extended vehicle motion constraint, the predicted maximum path error still exceeds the lane width constraint, the vehicle motion constraint may be further extended and a second optimization with the further extended vehicle motion constraint may be carried out. This process may be repeated until the maximum difference between the predicted vehicle path and the reference path is smaller than the lane width constraint.

However, a driving situation may occur in which a further extension of the vehicle motion constraint may also lead to safety issues, e.g., if the jerk reaches a value which causes harm to a passenger. Therefore, the extension of the vehicle motion constraint may be limited to a predetermined value. In case this predetermined limit value is reached and the maximum path error is still larger than the lane width constraint, a second constraint may be extended as described below.

According to an example, a value by which the at least one constraint on the vehicle motion may be extended (extension value) after each optimisation may depend on the maximum path error. In other words, the vehicle motion constraint may be extended more if the maximum path error is larger and vice versa.

Preferably, a function according to which the value of the at least one constraint on the vehicle motion is extended may depend on the maximum path error. For example, the function may be a linear relationship between the maximum path error and an extension value of the vehicle motion constraint if the maximum path error lies in a predetermined range. In case the maximum path error is lower than a lower limit of said predetermined range, a lower order function/relationship may be chosen. On the other hand, if the maximum path error is higher than an upper limit of said predetermined range, a higher order function/relationship may be chosen. This allows for an optimized adaption of the vehicle motion constraint in different driving situations depending on the maximum path error.

The extension of the vehicle motion constraint may be carried out if the predicted maximum path error exceeds the lane width constraint. Thus, preferably a difference between the lane width constraint and the maximum path error may be considered to define the value by which the at least one constraint on the vehicle motion is extended. This means that only the portion of the maximum path error exceeding the lane width constraint may be considered in the function/relationship between the maximum path error and the extension value of the vehicle motion constraint. However, it may be also possible for the entire maximum path error to be included in the relationship. Then it may also be possible to extend the vehicle motion constraint before the maximum path error exceeds the lane width constraint, e.g., in a case in which the maximum path error approaches the lane width constraint.

According to an example, the predetermined prediction horizon may comprise a predetermined number of sample steps, and the optimization of the predicted vehicle path and the predicted vehicle motion may be carried out at each sample step. This means that the formulas (1) to (3) may be in discrete time, and that the minimization of the cost function is performed at each sample step for the entire prediction horizon. Accordingly, the prediction of future behaviour of the vehicle can be adapted at each sample step depending on the conditions in the current sample step, which may be detected/identified, for example, by the different sensors of the vehicle. Thus, the quality of the prediction can be improved. Preferably, the reference path may also be updated at each sample step of the predetermined prediction horizon, which means that an updated reference path may be obtained at each sample step.

According to an example, a difference between the predicted vehicle path and the reference path is calculated for each sample step of the predetermined prediction horizon, and the maximum path error is determined by selecting the maximum difference from the differences calculated for each sample step. In other words, the vehicle path and motion may be predicted and optimized at each sample step of the prediction horizon for the entire prediction horizon, a difference between a predicted vehicle path position and a reference path position may be determined for each sample step of the prediction horizon, and the largest difference of the determined predicted differences may be selected as maximum path error. This procedure may be repeated at each sample step of the prediction horizon, so that also the quality of the prediction regarding the maximum path error can be improved by considering the current vehicle conditions at the start of the prediction/optimization.

According to an example, the optimization of the predicted vehicle path and the predicted vehicle motion may further consider at least one constraint on the at least one manipulated variable.

This means that at least one constraint on a variable of the input vector $U$ is considered, e.g., according to formula (3)

$$G_U\big(U(t), \dots U(t+P)\big) \cdot U \le 0 \qquad\qquad (4)$$

wherein $G_U$ denotes a coefficient of constraint for the input vector $U$.

For example, a constraint on the least one manipulated variable may be a constraint on steering angle, driving torque, and/or braking torque. In the following, a constraint on the least one manipulated variable is also referred to as *"input constraint"*.

According to an example, if a limit value of a first constraint on the vehicle motion is reached, a second constraint on the vehicle motion and/or the at least one constraint on the at least one manipulated variable may be extended. As described above, a predetermined limit value for the extension of a vehicle motion constraint may be required to maintain safety of the vehicle's passengers. In case a predetermined limit value of a first vehicle motion constraint is reached and the maximum path error is still larger than the lane width constraint, a second vehicle motion constraint and/or a constraint on a manipulated variable may be extended. For example, if the extension of a jerk constraint reaches an allowable value for the jerk (e.g., a value which may cause a certain acceleration of the passengers/body parts of the passengers in the vehicle) defined as predetermined limit value a constraint on the steering angle may be extended. Thus, it may be possible to keep the lane even in difficult driving situations.

Summarizing, the disclosed subject matter allows for an early detection of an inadmissible deviation of the vehicle from the reference path, which can then be taken into account in a current calculation of the vehicle model and thus avoided in real driving operation. In this way, the safety of the passengers in an automated vehicle can be increased.

In the following the claimed subject matter will be further explained based on at least one preferential example with reference to the attached drawings, wherein:

Figure 1          schematically shows a top view of a vehicle according to a preferred example of the present invention;

Figure 2          schematically shows forces and kinematic parameters occurring on a moving vehicle required for a vehicle model usable in a control device according to the present invention;

Figures 3         schematically shows an example of a vehicle control unit in which a control device according to the present invention may be included;

Figures 4         schematically shows subunits included in the vehicle control unit depicted in Fig. 3;

Figure 5          schematically shows a subunit of the vehicle control unit depicted in Fig. 4, which represents a preferred example of a control device according to the present invention;

Figure 6          shows a flow chart describing a preferred example of the method according to the present invention;

Figure 7          shows a diagram with exemplary curves of state and manipulated variables when carrying out the method described in Fig. 6; and

Figures 8a and 8b    show two diagrams illustrating the effect of the method described in Fig. 6.

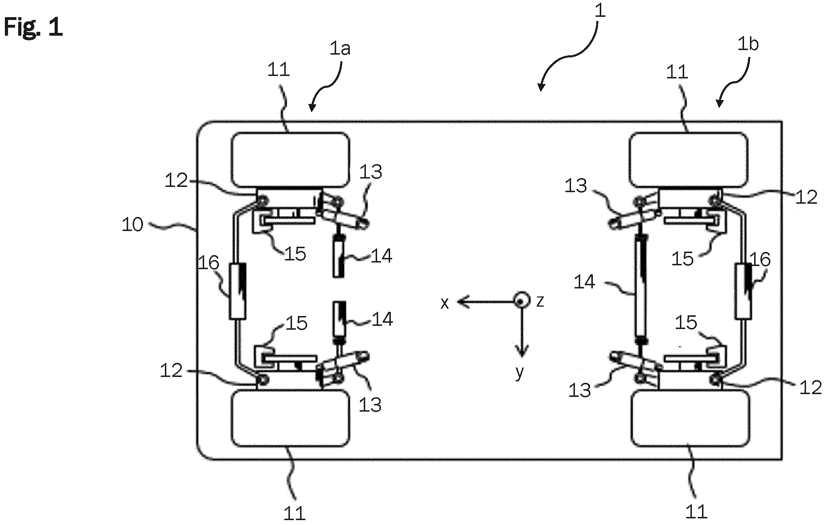

Figure 1 schematically shows a top view of an automated vehicle 1 accordingto a preferred example of the present invention. According to the depicted example, the front-rear direction of the automated vehicle 1 is the x-axis (positive in forward direction), the left-right direction is the y-axis (positive in left direction), and the vertical direction is the z-axis (positive in upward direction). The automated vehicle 1 comprises a vehicle body 10 and four wheels 11, each of which driven by a drive motor 12, supported by a suspension actuator 13 and decelerated by a brake 15. The drive motors 12 may be electric wheel hub motors 12 that drive each wheel 11 independently (forward and reverse). Alternatively or additionally, a conventional powertrain with combustion engine, gearbox and axle ratio can be used to drive the wheels 11.

According to the depicted example, the suspension actuators 13 are provided between each drive motor 12 and the vehicle body 10, to absorb vibrations and shocks generated in each wheel 11. For example, semi-active suspension actuators 13 may be used, in which a variable viscosity damper and a constant length coil spring or a constant viscosity damper and a variable length coil spring can be combined. Preferably active suspension actuators 13 may be used which are electrically driven. The active suspension actuators 13 may include, for example, a linear motor or a combination of a rotary motor and a rotary linear motion mechanism.

The brake 15 attached to each wheel 11 may be hydraulically operated friction brake 15, wherein the hydraulic operation may be controlled via solenoid valves, for example. Alternatively or additionally, the electric wheel hub motors 12 may be used for recuperative braking.

Furthermore, the depicted automated vehicle 1 includes a stabilizer 16 and a steering 14 on each of its front and rear axles 1a, 1b, wherein each stabilizer 16 is mounted on the vehicle body 10. The stabilizers 16 move in conjunction with the vertical movement of the left and right wheels 11 to suppress vehicle roll. The stabilizers 16 may preferably be active stabilizers 16 that can electrically adjust the angle of roll.

The steering 14 steers the wheels 11 to determine the direction of travel of the automated vehicle 1. According to the example shown, each wheel 11 of the front axle 1a can be steered independently of each other by means of a steering unit 14, and the wheels 11 of the rear axle 1b can be steered via a common steering unit 14. The steering 14 may preferably be an active steering 14 that can electrically adjust a steering angle of a steered wheel 11.

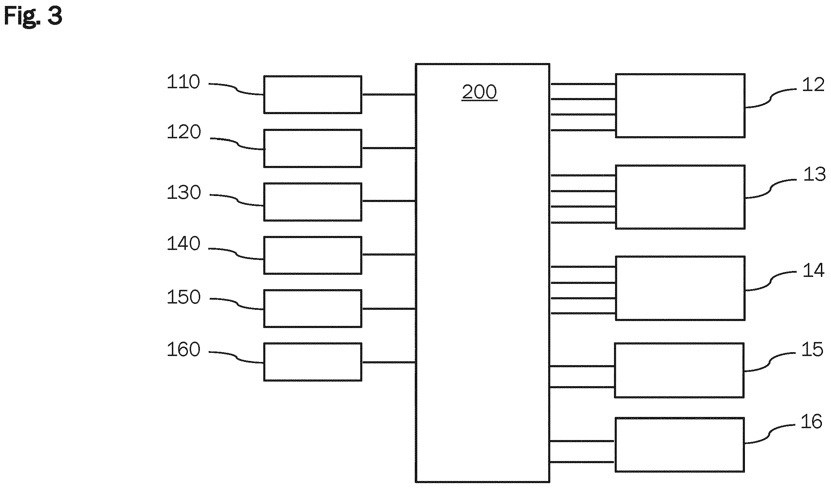

The automated vehicle 1 further comprises a vehicle control unit (not depicted in Fig. 1) for controlling the vehicle movements by means of the drive motors 12, the suspension actors 13, the steering 14, the brakes 15 and the stabilizers 16. An example of a vehicle control unit 200 in which a control device 240 according to the present invention may be included is described below in connection with the Figs. 3 to 5. The vehicle control unit 200 allows to control the translation of the vehicle in x, y and z direction as well as the rotation of the vehicle around the x, y and z axis (roll, pitch, yaw). As a result, drivability and safety can be improved when driver assistance systems are used, and ride comfort during autonomous driving can also be enhanced.

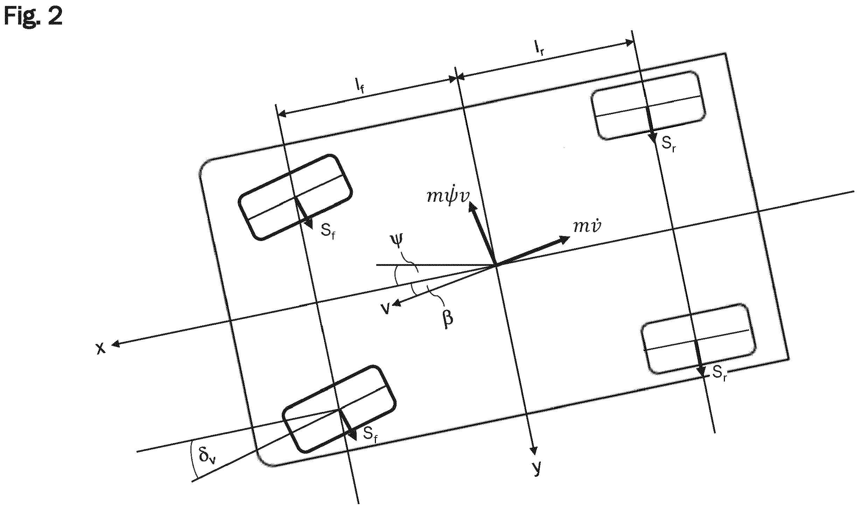

Figure 2 schematically shows forces and kinematic parameters occurring on a moving vehicle which have to be considered in a vehicle model usable in a control device according to the present invention (e.g., a state space model according to formula (1)). The depicted parameters are designated as follows: $m$ - vehicle mass, $v$ - vehicle velocity, $\psi$ - yaw angle, $\beta$ - side slip angle, $\delta$ - steering angle, $l_f$, $l_r$ - wheelbase, $S_f$ - side force on the front wheels, $S_r$ - side force on the rear wheels.

Based on the parameters shown in Fig. 2 the equilibrium of forces and moments of the vehicle can be written as:

$$mv(\dot{\beta} + \dot{\psi}) = 2S_f + 2S_r \qquad (5)$$

$$I\ddot{\psi} = 2S_f\, l_f - 2S_r l_r \qquad (6)$$

wherein $I$ denotes the vehicle's moment of inertia.

The equations of motion of the vehicle can then be derived from formulas (5) and (6) and transformed into a state-space model according to formula (1), in order to predict and optimize the vehicle path and the vehicle motion.

Figures 3 schematically shows an example of a vehicle control unit 200 in which a control device 240 according to the present invention may be included. The depicted vehicle control unit 200 may be configured to control the automated vehicle 1 depicted in Fig. 1. It is electrically connected to a plurality of sensors 110 to 160 attached to the vehicle 1, namely to a camera 110, a radar 120, a GPS 130, a yaw rate sensor 140, a G sensor 150, and a steering sensor 160. The electrical connection may be wirelessly or by wire depending on the location and the type of sensor. The vehicle control unit 200 may receive signals of the connected sensors 110 to 160 which may serve for path planning and/or for monitoring and controlling the behaviour of the automated vehicle 1.

Additionally, the vehicle control unit 200 is electrically connected to a plurality of actors 12 to 16, namely to the drive motors 12, the suspension actors 13, the steering 14, the brakes 15 and the stabilizers 16 of the automated vehicle 1 (cf. also Fig. 1). The electrical connection may be wirelessly or by wire depending on the location and the type of actor. The vehicle control unit 200 may be configured to control the actuators 12 to 16 of the automated vehicle 1 based on a vehicle model and a constrained cost function. The cost function allows to determine optimized manipulated variables for controlling the actuators 12 to 16, prioritising a lane width constraint to ensure the safety of the vehicle's passengers.

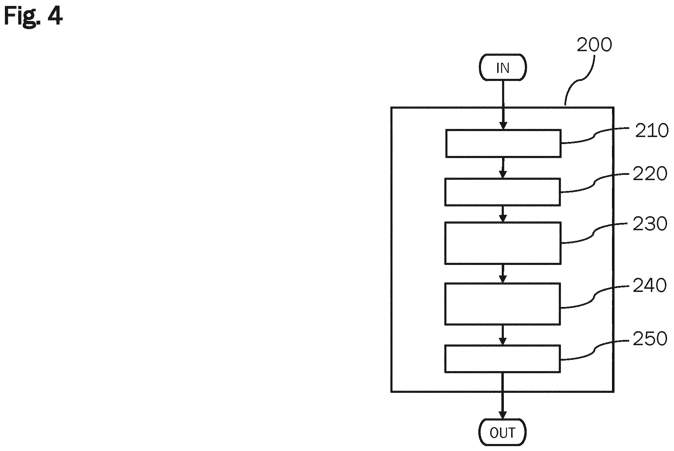

Figures 4 schematically shows subunits 210 to 250 included in the vehicle control unit 200 depicted in Fig. 3. The depicted subunits 210 to 250 comprise an input unit 210, a filter unit 220, a path planning unit 230, a control unit 240 and an output unit 250. The input unit 210 may receive sensor signals from the plurality of sensors 110 to 160 attached to the automated vehicle 1 (IN). The received sensor signals may be filtered in the filter unit 220, to remove unwanted noise therefrom. Based on the filtered signals, path and motion planning may be carried out in the path planning unit to generate the reference path and the target state vector $X_r$. The reference path and the manipulated variables resulting from the target state vector $X_r$ may be transmitted to the control unit 240, in which the transmitted manipulated variables are optimized using a constrained cost function. The optimized manipulated variables are then transmitted by the output unit 250 to the plurality of actors of the automated vehicle 1 (OUT).

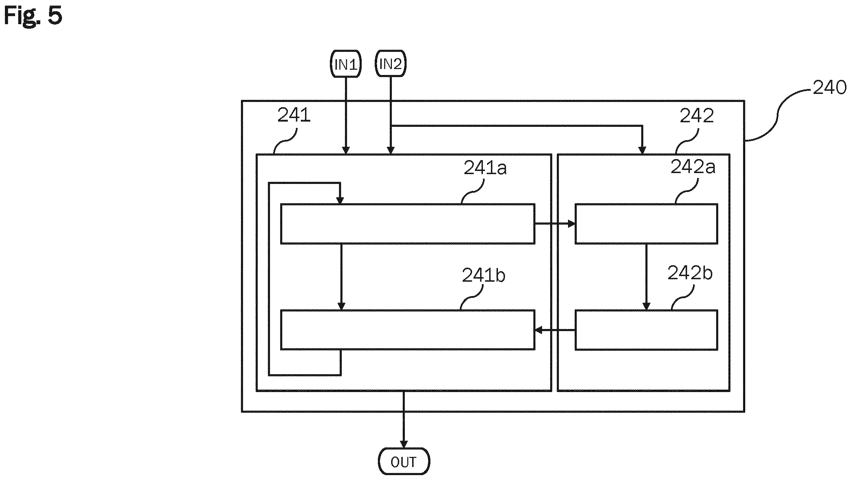

Figure 5 schematically shows components and data connections of the control device 240 depicted in Fig. 4, which represents a preferred example of a control device according to the present invention. The control unit 240 comprises two subunits 241 and 242, each of which is in turn subdivided into two further subunits 241a, 241b and 242a, 242b. Subunit 241 performs the calculations for the optimisation, while subunit 242 performs the calculations of the constraints. Both subunits 241, 242 receive the reference path and the manipulated variables resulting from the target state vector $X_r$ (IN2) from the path planning unit 230. The subunit 241 further receives the current vehicle state (IN1), which can be derived from the received sensor signals filtered by the filter unit 220. Based on the received vehicle state and the received manipulated variables, the subunit 241a predicts the vehicle path and the vehicle motion using a vehicle model representing the vehicle dynamics of the automated vehicle 1. The predicted vehicle path and motion are then transmitted to the subunit 241b for optimization. For this purpose, the subunit 241b minimizes a constrained cost function by adjusting the manipulated variables accordingly. The constraints are in turn provided by subunit 242, which also receives the predicted path and motion of the vehicle from subunit 241a via its subunit 242a. The subunit 242a calculates a maximum path error from a difference between the reference path and the predicted vehicle path and transmits the calculated maximum path error to the subunit 242b. Subunit 242b compares the received maximum path error with a lane width constraint and extends at least one of the constrains of the cost function if the maximum path error is larger than the lane width constraint. Preferably, a constraint on the jerk is extended by the subunit 242b. The extended constraint is then transmitted to subunit 241a to be used to minimize the cost function in a subsequent optimization step. From the course of the arrows between subunits 241a to 242b, it is clear that predicting the vehicle path and minimizing the cost function using updated constraints depending on a maximum path error is an iterative process that is repeated until an optimized vehicle path is determined that allows the automated vehicle 1 to safely maintain the lane. When the optimization has converged, the manipulated variables resulting from the minimized cost function are transmitted to the output device 250 (OUT).

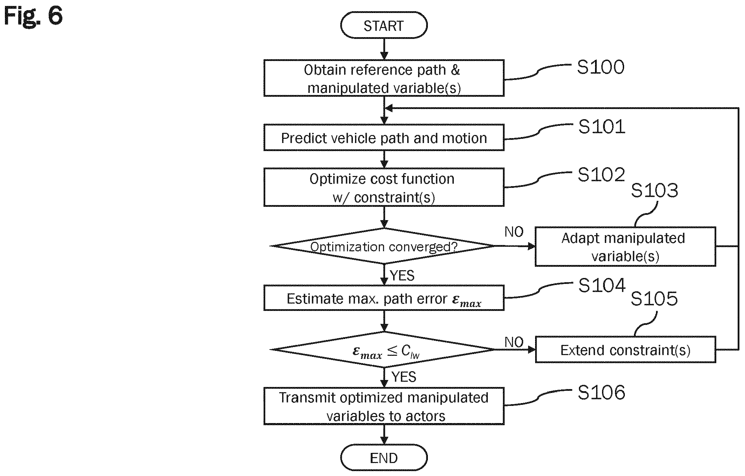

Figure 6 shows a flow chart describing a preferred example of the method according to the present invention. For example, the method may be carried out by the control device 240 being a subunit of the vehicle control unit 200 as described in connection with the preceding figures. After starting the method, in step 100 a reference path and at least one manipulated variable are received by the control device 240. The reference path may be calculated by the path planning unit 230 of the vehicle control unit 200, and may include the variables of the target state vector $X_r$. The at least one manipulated variable may be, for example, a steering angle, a driving torque and/or a braking torque at the individual wheels of the vehicle. Preferably, the at least one manipulated variable may be an input vector of a vehicle model according to formula (1), which may be included in the control device 240 and may comprise a plurality of manipulated variables.

Subsequently, in step S101 a vehicle path and a vehicle motion are predicted for a predetermined prediction horizon by the control device 240 based on the obtained manipulated variable(s) using the vehicle model. Then, the vehicle path and motion are optimized in step S102 by minimizing a cost function with one or more constraints. In order to minimize the cost function, the manipulated variable(s) are adapted/modified until the optimization converges (S103). Based on the result of the optimization in step S102, a maximum path error $\varepsilon_{max}$ in the predetermined prediction horizon is determined in step S104 using a difference between the optimized predicted vehicle path and the reference path received from the path planning unit 230. This means that a maximum deviation of the predicted vehicle path from the reference path in the predetermined prediction horizon is identified in this step. If the maximum path error $\varepsilon_{max}$ is smaller than a lane width constraint $C_{lw}$ on the reference path, the manipulated variable(s) resulting from the optimization in step S102 are transmitted to the actor(s) of the vehicle 1, e.g., to the steering 14, the brakes 15 or the drive motors 12. After that, the method is finished.

If, however, the maximum path error $\varepsilon_{max}$ is larger than the lane width constraint $C_{lw}$, at least one constraint of the cost function, e.g., a constraint on the jerk, is extended (S105), and the prediction and optimization of the vehicle path and motion is performed again using the extended constraint. This process is repeated until the maximum path error $\varepsilon_{max}$ becomes smaller than the lane width constraint $C_{lw}$.

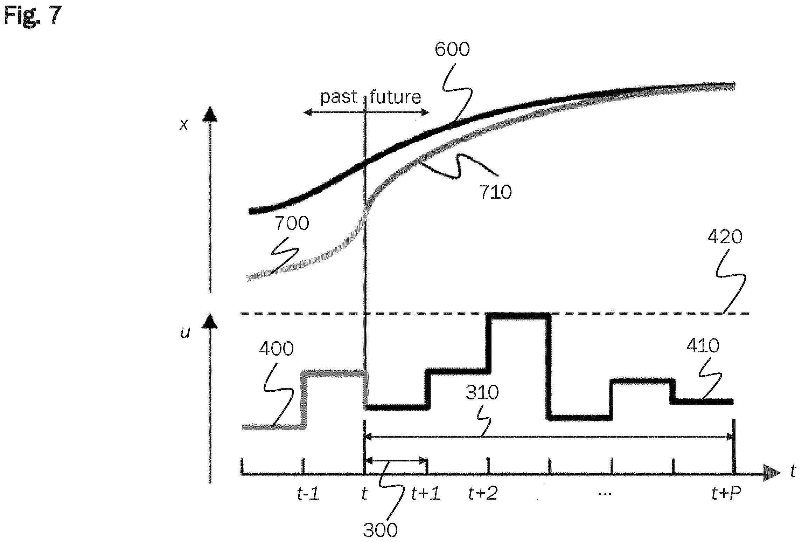

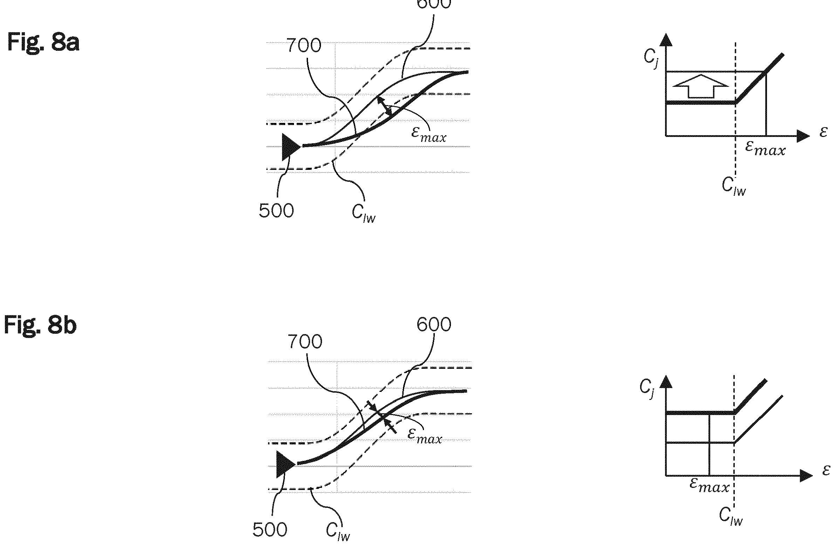

Figure 7 shows a diagram with exemplary curves of state and manipulated variables when carrying out the method described in Fig. 6. In particular, the diagram shows the future behaviour of a vehicle according to Fig. 1 as a function of optimized manipulated variables. In this context, state variables x and manipulated variables u of the vehicle model over time t are depicted, namely a reference path 600, a travelled vehicle path 700 and a predicted vehicle path 710 (x-axis) as well as a manipulated variable 400, 410 and an input constraint 420 (u-axis). The current point in time on the time axis, at which the calculation of the future behaviour of the vehicle for a predetermined prediction horizon 310 starts, is referred to as t. The manipulated variable 400 includes past input values resulting in the travelled path 700, while the manipulated variable 410 includes future input values predicted at each sample step t, t+1, t+2 ... t+P for each time interval 300 in the prediction horizon 310. The predicted input values of the manipulated variable 410 are calculated by optimizing a cost function as given in formula (2) considering constraints on the manipulated variables and the state variables as given in formulas (3) and (4). The optimization of the cost function is carried out in every future sample step t+1, t+2 ... t+P during the predetermined prediction horizon 310, in order to minimize the difference between the predicted vehicle path 710 and the reference path 600. From Fig. 7, it can be seen that to close the gap between the predicted and reference paths 710, 600, the manipulated variable 410 has to be increased up to the input constraint 420 at the sample step t+1. Due to the limitation of the input constraint 420, the difference between the vehicle path 710 and the reference path 600 can only be compensated at a later time point. In case that the input constraint 420 caused the predicted maximum error resulting from the difference between the vehicle path 710 and the reference path 600 to exceed the lane width constraint, a vehicle motion constraint (not depicted) is extended as described below in connection to the Figs. 8a and 8b.

Figures 8a and 8b show two diagrams illustrating the effect of the method described in Fig. 6. Both figures show on the left-hand side a lane with a lane width constraint $C_{lw}$ on both sides and a centreline constituting the reference path 600. Furthermore, the predicted vehicle path 710, the maximum path error $\varepsilon_{max}$ and the starting point t of the prediction, which is marked by a triangle, are shown. On the right-hand side of each of the two figures is a diagram showing a set value of a constraint on vehicle motion $C_j$ over the path error $\varepsilon$. In addition, the lane width constraint $C_{lw}$ is plotted as a vertical line perpendicular to the horizontal axis, marking the limit for the maximum path error $\varepsilon_{max}$.

In Fig. 8a, it can be seen that the predicted maximum path error $\varepsilon_{max}$ exceeds the lane width constraint $C_{lw}$ so that a vehicle may not be able to maintain the lane safely. Therefore, it is required that the value of the vehicle motion constraint $C_j$ is extended according to its set value curve, as marked by the bold error in the diagram on the right-hand side of Fig. 8a.

The result of the extension of the vehicle motion constraint $C_j$ is visible in Fig. 8b. The maximum path error $\varepsilon_{max}$ predicted with the extended constraint shows only a minor deviation from the reference path 600 and is significantly smaller than the lane width constraint $C_{lw}$. Therefore, it is possible for the vehicle to keep the lane safely.

Again summarizing, the disclosed subject matter allows for an early detection of an inadmissible deviation of the vehicle from the reference path, which can then be taken into account in a current calculation of the vehicle model and thus avoided in real driving operation. In this way, the safety of the passengers in an automated vehicle can be increased.

As will be appreciated by one of skill in the art, the present invention, as described hereinabove and the accompanying figures, may be embodied as a method (e.g., a computer-implemented process or any other process), apparatus (including a device, machine, system, computer program product, and/or any other apparatus), or a combination of the foregoing. Aspects/Examples of the present invention may be a software entirely (including firmware, resident software, micro-code, etc.), or a combination of software and hardware aspects that may be referred to as a "system". Furthermore, the present invention may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present invention may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment of the invention.

It should be noted that terms such as "server" and "processor" may be used herein to describe devices that may be used in certain aspects of the present invention and should not be construed to limit the present invention to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present invention should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the invention, and should not be construed to limit the present invention to any particular logic flow or logic implementation. The described logic may be partitioned into different logic blocks (e.g., programs, modules, functions, or subroutines) without changing the overall results or otherwise departing from the scope of the invention, as defined by the appended claims.

Often, logic elements may be added, modified, omitted, performed in a different order, or implemented using different logic constructs (e.g., logic gates, looping primitives, conditional logic, and other logic constructs) without changing the overall results or otherwise departing from the scope of the invention, as defined by the appended claims.

The present invention may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present invention may be written in an object oriented, scripted or unscripted programming language such as Java, Perl, Smalltalk, C++, or the like. However, the computer program code for carrying out operations of aspects of the present invention may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the invention may be implemented as a combination of both software (e.g., a computer program product) and hardware. Still other aspects of the present invention are implemented as entirely hardware, or entirely software.

While certain exemplary aspects have been described and shown in the accompanying drawings, it is to be understood that such embodiments are merely illustrative of and are not restrictive on the invention, and that the aspects of the present invention are not limited to the specific constructions and arrangements shown and described, since various other changes, combinations, omissions, modifications and substitutions, in addition to those set forth in the above paragraphs, are possible, without departing from the scope of invention, as defined by the appended claims.

Those skilled in the art will appreciate that various adaptations, modifications, and/or combination of the just described aspects and examples can be configured. Therefore, it is to be understood that, within the scope of the appended claims, the invention may be practiced other than as specifically described herein. For example, unless expressly stated otherwise, the steps of processes described herein may be performed in orders different from those described herein and one or more steps may be combined, split, or performed simultaneously. Those skilled in the art will also appreciate, in view of this invention, that different aspects or examples of the invention described herein may be combined to form other aspects or examples of the invention, without departing from the scope of the invention, as defined by the appended claims.

**Claims**

1. A method for controlling a vehicle (1) with at least one actor (12 - 16) and a control device (240), the method comprising the steps:

   - obtaining a reference path (600) and at least one manipulated variable;
   - predicting a vehicle path (710) and a vehicle motion for a predetermined prediction horizon (310) based on the at least one manipulated variable;
   - optimizing the predicted vehicle path (710) and the predicted vehicle motion by varying the at least one manipulated variable considering at least one constraint on the vehicle motion ($C_j$);

   **characterized in that** the method further comprises the steps:

   - determining a maximum path error ($\varepsilon_{max}$) from a difference between the optimized predicted vehicle path (710) and the reference path (600) in the predetermined prediction horizon (310),
   if the maximum path error ($\varepsilon_{max}$) is smaller than a lane width constraint ($C_{lw}$) on the reference path (600), transmitting at least one manipulated variable resulting from the optimized predicted vehicle path (710) and the optimized predicted vehicle motion to the at least one actor (12 - 16) of the vehicle; and
   if the maximum path error ($\varepsilon_{max}$) is larger than the lane width constraint ($C_{lw}$) on the reference path (600),

      extending the at least one constraint on the vehicle motion ($C_j$), and
      repeating the optimization of the predicted vehicle path (710) and the predicted vehicle motion using the at least one extended constraint on the vehicle motion ($C_j$).

2. Method according to claim 1, wherein the optimization of the predicted vehicle path (710) and the predicted vehicle motion in the predetermined prediction horizon (310) is repeated until the maximum path error ($\varepsilon_{max}$) is smaller than the lane width constraint ($C_{lw}$) and/or until a predetermined limit value of the at least one constraint on the vehicle motion ($C_j$) is reached.

3. Method according to claim 1 or 2, wherein a value by which the at least one constraint on the vehicle motion ($C_j$) is extended after each optimisation depends on the maximum path error ($\varepsilon_{max}$).

4. Method according to claim 3, wherein a function according to which the value of the at least one constraint on the vehicle motion ($C_j$) is extended depends on the maximum path error ($\varepsilon_{max}$).

5. Method according to claim 3 or 4, wherein a difference between the lane width constraint ($C_{lw}$) and the maximum path error ($\varepsilon_{max}$) is considered to define the value by which the at least one constraint on the vehicle motion ($C_j$) is extended.

6. Method according to at least one of the preceding claims, wherein the predetermined prediction horizon (310) comprises a predetermined number of sample steps, and the optimization of the predicted vehicle path (710) and the predicted vehicle motion is carried out at each sample step.

7. Method according to claim 6, wherein a difference between the optimized predicted vehicle path (710) and the reference path (600) is calculated for each sample step of the predetermined prediction horizon (310), and the maximum path error ($\varepsilon_{max}$) is determined by selecting the maximum difference from the differences calculated for each sample step.

8. Method according to at least one of the preceding claims, wherein the optimization of the predicted vehicle path (710) and the predicted vehicle motion further considers at least one constraint on the at least one manipulated variable.

9. Method according to claim 8, wherein if a predetermined limit value of a first constraint on the vehicle motion ($C_j$) is reached, a second constraint on the vehicle motion ($C_j$) and/or the at least one constraint on the at least one manipulated variable is extended.

10. Control device (240) configured to perform the method according to at least one of the claims 1 to 9.

11. Vehicle (1) with at least one actor (12 - 16) including the control device (240) according to claim 10.

12. Computer program product storable in a memory comprising instructions which, when carried out by a computer, cause the computer to perform the method according to at least one of the method claims 1 to 9.


**Patentansprüche**

1. Verfahren zum Steuern eines Fahrzeugs (1) mit mindestens einem Aktor (12 - 16) und einer Steuervorrichtung (240), wobei das Verfahren die Schritte umfasst:

   - Erhalten eines Referenzpfads (600) und mindestens einer Stellgröße;
   - Vorhersagen eines Fahrzeugpfads (710) und einer Fahrzeugbewegung für einen vorbestimmten Vorhersagehorizont (310) basierend auf der mindestens einen Stellgröße;
   - Optimieren des vorhergesagten Fahrzeugpfads (710) und der vorhergesagten Fahrzeugbewegung durch Variieren der mindestens einen Stellgröße unter Berücksichtigung mindestens einer Bedingung für die Fahrzeugbewegung ($C_j$);

   **dadurch gekennzeichnet, dass** das Verfahren ferner die Schritte umfasst:

   - Bestimmen eines maximalen Pfadfehlers ($\varepsilon_{max}$) aus einer Differenz zwischen dem optimierten vorhergesagten Fahrzeugpfad (710) und dem Referenzpfad (600) in dem vorbestimmten Vorhersagehorizont (310),
   wenn der maximale Pfadfehler ($\varepsilon_{max}$) kleiner als eine Fahrspurbreitenbedingung ($C_{lw}$) auf dem Referenzpfad (600) ist,
   Übertragen mindestens einer Stellgröße, die sich aus dem optimierten vorhergesagten Fahrzeugpfad (710) und der optimierten vorhergesagten Fahrzeugbewegung ergibt, an den mindestens einen Aktor (12 - 16) des Fahrzeugs; und
   wenn der maximale Pfadfehler ($\varepsilon_{max}$) größer als die Fahrspurbreitenbedingung ($C_{lw}$) auf dem Referenzpfad (600) ist,

   Erweitern der mindestens einen Bedingung für die Fahrzeugbewegung ($C_j$), und
   Wiederholen der Optimierung des vorhergesagten Fahrzeugpfads (710) und der vorhergesagten Fahrzeugbewegung unter Verwendung der mindestens einen erweiterten Bedingung für die Fahrzeugbewegung ($C_j$).

2. Verfahren nach Anspruch 1, wobei die Optimierung des vorhergesagten Fahrzeugpfads (710) und der vorhergesagten Fahrzeugbewegung in dem vorbestimmten Vorhersagehorizont (310) wiederholt wird, bis der maximale Pfadfehler ($\varepsilon_{max}$) kleiner als die Fahrspurbreitenbedingung ($C_{lw}$) ist und/oder bis ein vorbestimmter Grenzwert der mindestens einen Bedingung für die Fahrzeugbewegung ($C_j$) erreicht ist.

3. Verfahren nach Anspruch 1 oder 2, wobei ein Wert, um den die mindestens eine Bedingung für die Fahrzeugbewegung ($C_j$) nach jeder Optimierung erweitert wird, von dem maximalen Pfadfehler ($\varepsilon_{max}$) abhängt.

4. Verfahren nach Anspruch 3, wobei eine Funktion, gemäß der der Wert der mindestens einen Bedingung für die Fahrzeugbewegung (Cj) erweitert wird, von dem maximalen Pfadfehler ($\varepsilon_{max}$) abhängt.

5. Verfahren nach Anspruch 3 oder 4, wobei eine Differenz zwischen der Fahrspurbreitenbedingung ($C_{lw}$) und dem maximalen Pfadfehler ($\varepsilon_{max}$) berücksichtigt wird, um den Wert zu definieren, um den die mindestens eine Bedingung für die Fahrzeugbewegung ($C_j$) erweitert wird.

6. Verfahren nach mindestens einem der vorhergehenden Ansprüche, wobei der vorbestimmte Vorhersagehorizont (310) eine vorbestimmte Anzahl von Abtastschritten umfasst und die Optimierung des vorhergesagten Fahrzeugpfads (710) und der vorhergesagten Fahrzeugbewegung bei jedem Abtastschritt durchgeführt wird.

7. Verfahren nach Anspruch 6, wobei eine Differenz zwischen dem optimierten vorhergesagten Fahrzeugpfad (710) und dem Referenzpfad (600) für jeden Abtastschritt des vorbestimmten Vorhersagehorizonts (310) berechnet wird und der maximale Pfadfehler ($\varepsilon_{max}$) durch Auswählen der maximalen Differenz aus den für jeden Abtastschritt berechneten Differenzen bestimmt wird.

8. Verfahren nach mindestens einem der vorhergehenden Ansprüche, wobei die Optimierung des vorhergesagten Fahrzeugpfads (710) und der vorhergesagten Fahrzeugbewegung ferner mindestens eine Bedingung für die mindestens eine Stellgröße berücksichtigt.

9. Verfahren nach Anspruch 8, wobei, wenn ein vorbestimmter Grenzwert einer ersten Bedingung für die Fahrzeugbewegung ($C_j$) erreicht ist, eine zweite Bedingung für die Fahrzeugbewegung ($C_j$) und/oder die mindestens eine Bedingung für die mindestens eine Stellgröße erweitert wird.

10. Steuervorrichtung (240), die konfiguriert ist, um das Verfahren nach mindestens einem der Ansprüche 1 bis 9 durchzuführen.

11. Fahrzeug (1) mit mindestens einem Aktor (12 - 16), das die Steuervorrichtung (240) nach Anspruch 10 umfasst.

12. Computerprogrammprodukt, das in einem Speicher gespeichert werden kann und Anweisungen umfasst, die, wenn sie von einem Computer ausgeführt werden, den Computer veranlassen, das Verfahren nach mindestens einem der Verfahrensansprüche 1 bis 9 durchzuführen.

**Revendications**

1. Procédé de commande d'un véhicule (1) avec au moins un acteur (12 - 16) et un dispositif de commande (240), le procédé comprenant les étapes suivantes :

   - l'obtention d'une trajectoire de référence (600) et d'au moins une variable manipulée ;
   - la prédiction d'une trajectoire de véhicule (710) et d'un mouvement de véhicule pour un horizon de prédiction prédéterminé (310) sur la base de l'au moins une variable manipulée ;
   - l'optimisation de la trajectoire de véhicule prédite (710) et du mouvement de véhicule prédit en faisant varier l'au moins une variable manipulée en tenant compte d'au moins une contrainte sur le mouvement de véhicule ($C_j$) ;

   **caractérisé en ce que** le procédé comprend en outre les étapes suivantes :

   - la détermination d'une erreur de trajectoire maximale ($\varepsilon_{max}$) à partir d'une différence entre la trajectoire de véhicule prédite optimisée (710) et la trajectoire de référence (600) dans l'horizon de prédiction prédéterminé (310),
   si l'erreur de trajectoire maximale ($\varepsilon_{max}$) est inférieure à une contrainte de largeur de voie ($C_{lw}$) sur la trajectoire de référence (600),
   la transmission d'au moins une variable manipulée résultant de la trajectoire de véhicule prédite optimisée (710) et du mouvement de véhicule prédit optimisé à l'au moins un acteur (12 - 16) du véhicule ; et
   si l'erreur de trajectoire maximale ($\varepsilon_{max}$) est supérieure à la contrainte de largeur de voie ($C_{lw}$) sur la trajectoire de référence (600),

      l'extension de l'au moins une contrainte sur le mouvement de véhicule ($C_j$), et
      la répétition de l'optimisation de la trajectoire de véhicule prédite (710) et du mouvement de véhicule prédit en utilisant l'au moins une contrainte étendue sur le mouvement de véhicule ($C_j$).

2. Procédé selon la revendication 1, dans lequel l'optimisation de la trajectoire de véhicule prédite (710) et du mouvement de véhicule prédit dans l'horizon de prédiction prédéterminé (310) est répétée jusqu'à ce que l'erreur de trajectoire maximale ($\varepsilon_{max}$) soit inférieure à la contrainte de largeur de voie ($C_{lw}$) et/ou jusqu'à ce qu'une valeur limite prédéterminée de l'au moins une contrainte sur le mouvement de véhicule ($C_j$) soit atteinte.

**3.** Procédé selon la revendication 1 ou 2, dans lequel une valeur par laquelle l'au moins une contrainte sur le mouvement de véhicule ($C_j$) est étendue après chaque optimisation dépend de l'erreur de trajectoire maximale ($\varepsilon_{max}$).

**4.** Procédé selon la revendication 3, dans lequel une fonction selon laquelle la valeur de l'au moins une contrainte sur le mouvement de véhicule ($C_j$) est étendue dépend de l'erreur de trajectoire maximale ($\varepsilon_{max}$).

**5.** Procédé selon la revendication 3 ou 4, dans lequel une différence entre la contrainte de largeur de voie ($C_{lw}$) et l'erreur de trajectoire maximale ($\varepsilon_{max}$) est considérée pour définir la valeur par laquelle l'au moins une contrainte sur le mouvement de véhicule ($C_j$) est étendue.

**6.** Procédé selon au moins l'une des revendications précédentes, dans lequel l'horizon de prédiction prédéterminé (310) comprend un nombre prédéterminé d'étapes d'échantillonnage, et l'optimisation de la trajectoire de véhicule prédite (710) et du mouvement de véhicule prédit est effectuée à chaque étape d'échantillonnage.

**7.** Procédé selon la revendication 6, dans lequel une différence entre la trajectoire de véhicule prédite optimisée (710) et la trajectoire de référence (600) est calculée pour chaque étape d'échantillonnage de l'horizon de prédiction prédéterminé (310), et l'erreur de trajectoire maximale ($\varepsilon_{max}$) est déterminée en sélectionnant la différence maximale parmi les différences calculées pour chaque étape d'échantillonnage.

**8.** Procédé selon au moins l'une des revendications précédentes, dans lequel l'optimisation de la trajectoire de véhicule prédite (710) et du mouvement de véhicule prédit tient en outre compte d'au moins une contrainte sur l'au moins une variable manipulée.

**9.** Procédé selon la revendication 8, dans lequel, si une valeur limite prédéterminée d'une première contrainte sur le mouvement de véhicule ($C_j$) est atteinte, une seconde contrainte sur le mouvement de véhicule ($C_j$) et/ou l'au moins une contrainte sur l'au moins une variable manipulée est étendue.

**10.** Dispositif de commande (240) configuré pour exécuter le procédé selon au moins l'une des revendications 1 à 9.

**11.** Véhicule (1) avec au moins un acteur (12 - 16) comprenant le dispositif de commande (240) selon la revendication 10.

**12.** Produit de programme informatique pouvant être stocké dans une mémoire comprenant des instructions qui, lorsqu'elles sont exécutées par un ordinateur, amènent l'ordinateur à exécuter le procédé selon au moins l'une des revendications de procédé 1 à 9.

**Fig. 1**

EP 4 311 736 B1

Fig. 2

**Fig. 3**

EP 4 311 736 B1

**Fig. 4**

EP 4 311 736 B1

Fig. 5

**Fig. 6**

START

↓

Obtain reference path & manipulated variable(s) — S100

↓

Predict vehicle path and motion — S101

↓

Optimize cost function w/ constraint(s) — S102

↓

Optimization converged? — S103
- NO → Adapt manipulated variable(s) → (loop back to Predict vehicle path and motion)
- YES ↓

Estimate max. path error $\varepsilon_{max}$ — S104

↓

$\varepsilon_{max} \leq C_{lw}$ — S105
- NO → Extend constraint(s) → (loop back)
- YES ↓

Transmit optimized manipulated variables to actors — S106

↓

END

## Fig. 7

EP 4 311 736 B1

Fig. 8a

Fig. 8b

# EP 4 311 736 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20200301374 A1

### Non-patent literature cited in the description

- **DU XINXIN et al.** Development of a Genetic-Algorithm-Based Nonlinear Model Predictive Control Scheme on Velocity and Steering of Autonomous Vehicles. *IEEE Transactions on industrial electronics,* November 2016, vol. 63 (11